# FASCICULE DE BREVET EUROPEEN

(11) **EP 2 434 121 B1**
(45) Date de publication et mention de la délivrance du brevet: **05.06.2019**
(21) Numéro de dépôt: 11175453.7
(22) Date de dépôt: 26.07.2011
(51) Int. Cl.: F02B 29/04, F02M 35/10

(54) **Echangeur de chaleur pour refroidir l'air de suralimentation d'un moteur, en particulier d'un véhicule automobile**
Wärmetauscher zur Kühlung der Ladeluft einer Brennkraftmaschine, insbesondere eines Kraftfahrzeugs
Heat exchanger for cooling supercharged intake air of an engine, in particular for automobiles

(30) Priorité: 28.09.2010 FR 1057790
(43) Date de publication de la demande: 28.03.2012
(73) Titulaire: VALEO SYSTEMES THERMIQUES, 78320 Le Mesnil Saint-Denis (FR)
(72) Inventeur: Odillard, Laurent, 72390 Le Luart (FR); Devedeux, Sébastien, 78000 Versailles (FR); Galland, Jean-Pierre, 78690 Les Essarts-Le-Roi (FR); Burgold, Sven, 78120 Rambouillet (FR)
(74) Mandataire: Metz, Gaëlle

(56) Documents cités:
- WO-A1-2008/101978
- DE-A1- 4 205 454
- DE-A1- 4 430 339
- DE-A1- 10 344 217
- DE-A1-102004 024 465
- DE-U1- 20 319 486
- FR-A1- 2 908 833
- FR-A1- 2 923 859
- JP-A- 5 099 087
- US-A1- 2002 062 808
- US-A1- 2010 077 996

## Description

L'invention concerne un échangeur de chaleur comportant un dispositif d'admission de fluide pour moteur, en particulier pour véhicule automobile.

Un domaine d'application préférentiel de l'invention est celui des moteurs thermiques suralimentés, notamment de véhicules automobiles, qui utilisent un échangeur de chaleur particulier, encore appelé refroidisseur d'air de suralimentation (en abrégé RAS), pour refroidir un fluide, à savoir l'air de suralimentation du moteur.

Les moteurs thermiques suralimentés, ou turbo-compressés, en particulier les moteurs diesel, sont alimentés par un air sous-pression appelé air de suralimentation provenant d'un turbo-compresseur actionné par les gaz d'échappement du moteur. Par suite de sa compression, cet air se trouve à une température trop élevée et il est souhaitable, pour un bon fonctionnement du moteur, de le refroidir avant son admission dans ce dernier. On utilise pour cela, de manière classique, un refroidisseur appelé refroidisseur d'air de suralimentation. Ce refroidisseur a pour fonction de refroidir l'air de suralimentation par échange thermique avec un autre fluide comme de l'air extérieur ou un liquide comme l'eau du circuit de refroidissement du moteur, formant ainsi un échangeur du type air/air ou liquide/air.

L'utilisation d'un échangeur du type air/air nécessite une implantation en face avant du véhicule, ce qui le rend plus vulnérable en cas de choc frontal. C'est la raison pour laquelle on préfère faire appel à un échangeur du type liquide/air, car celui-ci peut être implanté dans un endroit choisi du compartiment moteur, en particulier près du moteur.

Un tel échangeur comporte alors une boîte de sortie qui peut notamment assurer la fonction d'admission de l'air de suralimentation vers chacun des cylindres du moteur.

Cette boîte de sortie ou d'admission peut êtres assemblée à la culasse du moteur, soit directement, soit par un élément intermédiaire. Cet assemblage est maintenu par un moyen de serrage tel que des vis de serrage.

Par exemple, FR 2 908 833 et WO 2008/101978 décrivent de tels dispositifs.

Cependant, dans certaines applications, l'axe des vis de serrage peut ne pas être perpendiculaire au plan de contact entre les deux surfaces en vis-à-vis. Par exemple, US 4 428 331 décrit des moyens de fixation d'un collecteur sur une culasse au moyen de vis de serrage inclinées par rapport audit plan de contact.

Avec de tels moyens, l'effort de serrage peut alors générer un effort tangentiel pouvant engendrer des contraintes mécaniques au sein même de la structure de la boîte d'admission risquant de provoquer une déformation de la boîte et/ou des problèmes d'étanchéité.

L'invention a donc pour objectif de réduire les contraintes mécaniques engendrées au niveau de la structure de la boîte d'admission.

À cet effet, l'invention a pour objet un échangeur de chaleur pour refroidir l'air de suralimentation d'un moteur en particulier pour véhicule automobile, comportant un dispositif d'admission de fluide pour moteur, ledit dispositif comprenant une boîte d'admission assemblée sur la culasse du moteur à l'aide d'un moyen de serrage exerçant une force de serrage inclinée par rapport au plan de contact entre ladite boîte d'admission et la culasse, ledit dispositif d'admission comportant au moins un moyen de reprise d'effort selon la composante tangentielle de la force de serrage.

Ledit dispositif d'admission selon l'invention comporte en outre les caractéristiques suivantes :
- ladite boîte d'admission forme la boîte de sortie dudit échangeur de chaleur entre un premier fluide configuré pour alimenter le moteur et un deuxième fluide,
- ledit au moins un moyen de reprise d'effort comporte un nombre prédéterminé de renforts de rigidification de ladite boîte d'admission,
- lesdits renforts de rigidification sont venus de matière avec ladite boîte d'admission,
- ladite boîte d'admission comporte une ouverture pour le passage du fluide provenant de l'échangeur de chaleur, et lesdits renforts de rigidification s'étendent axialement à travers ladite ouverture, selon une direction sensiblement parallèle à la composante tangentielle de la force de serrage.

De plus, ledit dispositif d'admission peut en outre comporter une ou plusieurs caractéristiques suivantes, prises séparément ou en combinaison :
- lesdits renforts de rigidification sont réalisés sous forme de colonnes,
- ledit au moins un moyen de reprise d'effort comporte une goupille de reprise d'effort s'étendant entre les deux surfaces en vis-à-vis de ladite boîte d'admission et de la culasse du moteur, selon une direction sensiblement perpendiculaire au plan de contact entre la boîte de sortie et la culasse du moteur,
- ladite goupille présente une forme sensiblement cylindrique,
- ladite goupille est d'une part reçue dans un logement complémentaire de ladite boîte d'admission et d'autre part configurée pour engager un contre-logement complémentaire prévu sur la culasse dudit moteur,
- le moyen de serrage comporte au moins une vis de serrage.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue en éclaté d'un échangeur de chaleur pour refroidir l'air de suralimentation,
- la figure 2 représente une plaque du faisceau d'échange de chaleur de l'échangeur de la figure 1,
- la figure 3a est une vue partielle en coupe représentant une paire de plaques de la figures 2 formant un second canal pour la circulation du second fluide,
- la figure 3b est une vue partielle en perspective représentant une paire de plaques de la figures 2 formant un second canal pour la circulation du second fluide,
- la figure 4 représente plus en détail une boîte de sortie de l'échangeur de la figure 1,
- la figure 5a est une vue partielle en coupe représentant la boîte de sortie fixée sur la culasse d'un moteur,
- la figure 5b est une vue partielle en coupe de la boîte de sortie avec un moyen de fixation sur la culasse du moteur et un moyen de reprise d'effort, et
- la figure 6 est une vue partielle en coupe représentant la boîte de sortie fixée sur la culasse d'un moteur par l'intermédiaire d'une platine de « Swirl ».

Dans ces figures, les éléments sensiblement identiques portent les mêmes références.

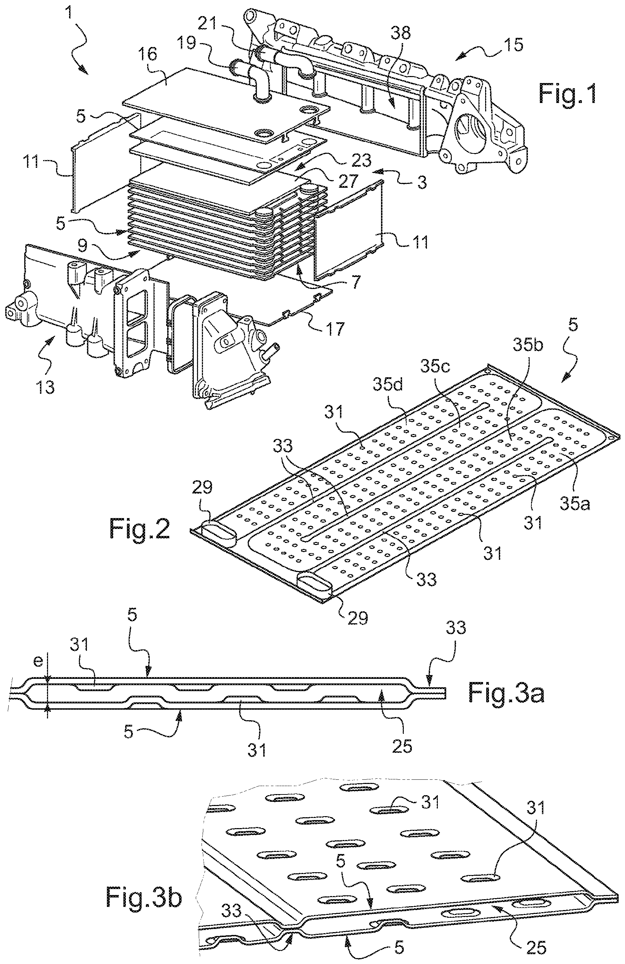

On a représenté sur la figure 1, une vue en éclaté d'un échangeur 1 de chaleur pour circuit d'alimentation en air d'un moteur, et en particulier pour refroidir l'air de suralimentation pour moteur thermique, tel qu'un moteur diesel de véhicule automobile.

### L'échangeur de chaleur

Cet échangeur 1 comporte un faisceau 3 d'échange de chaleur entre un premier fluide tel que l'air de suralimentation et un deuxième fluide tel que le liquide de refroidissement.

Le faisceau 3 comporte un empilement de plaques 5 parallèles. Le faisceau 3 présente ainsi une forme générale sensiblement parallélépipédique avec deux petits 7 et deux grands 9 cotés latéraux.

Selon le mode de réalisation illustré, l'échangeur peut comporter deux enveloppes 11 latérales au niveau des petits côtés 7.

L'échangeur 1 comporte en outre un dispositif d'admission du premier fluide au moteur avec une boîte d'entrée 13 et une boîte de sortie 15 pour le premier fluide respectivement au niveau des grands côtés latéraux 9 de sorte qu'après avoir traversé le faisceau 3, le premier fluide quitte l'échangeur 1 pour alimenter le moteur.

Selon le mode de réalisation décrit c'est la boîte de sortie 15 qui est fixée sur la culasse du moteur (non représenté) pour permettre l'admission de l'air refroidi, comme cela sera décrit par la suite, et forme donc une boîte d'admission 15 du premier fluide.

La boîte 15 est donc appelée par la suite indifféremment boîte d'admission 15 ou boîte de sortie 15.

Cette boîte d'admission 15 de l'air refroidi ou boîte de sortie 15 de l'échangeur 1 peut être soit directement soit en alternative par l'intermédiaire d'une platine de Swirl par exemple.

Le positionnement des boîtes d'entrée 13 et de sortie 15 est donné à titre illustratif.

Bien sûr on peut prévoir en variante que le faisceau 3 soit logé dans un boîtier comportant une tubulure d'entrée et une tubulure de sortie pour le premier fluide.

De plus, dans l'exemple illustré, l'échangeur 1 comporte un couvercle 16 et un fond de boîtier 17. Selon le mode de réalisation illustré, le couvercle 16 présente une tubulure d'entrée 19 et une tubulure de sortie 21 pour le second fluide.

Les enveloppes latérales 11, le couvercle 16 et le fond de boîtier 17 sont par exemple réalisés en matériau plastique.

Le couvercle 16, les enveloppes latérales 11, et le fond de boîtier 17 forment sensiblement un carter sur lequel sont rapportées les boîtes d'entrée 13 et de sortie 15 pour le premier fluide.

### Le faisceau d'échange

En se référant maintenant également aux figures 2 à 3b, on décrit plus en détail le faisceau d'échange de chaleur 3.

Comme mentionné précédemment, le faisceau 3 comporte un empilement de plaques 5. Ces plaques 5 sont par exemple des plaques embouties.

Une plaque 5 (figure 2) présente une forme générale rectangulaire. Les plaques 5 sont disposées par paires (voir figure 3a).

L'empilement des plaques 5 permet de délimiter d'une part des premiers canaux 23 (figure 1) pour la circulation du premier fluide, et d'autre part des seconds canaux 25 pour la circulation du second fluide (figures 3a,3b).

En effet, les plaques 5 disposées par paires (voir figure 3a) définissent un espace e permettant de délimiter un second canal 25 pour la circulation du second fluide, le liquide de refroidissement du moteur dans notre exemple. Les seconds canaux 25 pour la circulation du second fluide sont donc définis par deux plaques adjacentes d'une paire.

Et, en se référant à nouveau à la figure 1, selon le mode de réalisation illustré, le faisceau 3 comporte, en outre, des intercalaires ondulés 27 disposés à chaque fois entre les plaques 5 prévues en vis-à-vis de deux paires de plaques 5 voisines. Ces intercalaires 27 sont par exemple brasés aux plaques 5.

L'espace aménagé entre les plaques 5 prévues en vis-à-vis de deux paires de plaques voisines dans lequel est inséré l'intercalaire 27 permet de définir une pluralité de premiers canaux 23 pour la circulation du premier fluide.

L'intercalaire 27 a pour fonction d'augmenter la surface d'échange en perturbant le premier fluide de manière à ce que celui-ci échange plus de chaleur avec le second fluide.

En outre, comme on le constate sur la figure 2, les plaques 5 comportent respectivement deux ouvertures, par exemple des tubulures 29, pour le passage du second fluide provenant de la tubulure d'entrée 19 pour ressortir par la tubulure de sortie 21. Ces tubulures 29 sont par exemple formées à proximité d'un des petits cotés des plaques 5.

Les tubulures 29 d'une plaque 5 communiquent avec les tubulures 29 d'une plaque 5 d'une paire voisine, par exemple par emboîtement, pour permettre la circulation du second fluide entre les plaques 5.

Par ailleurs, comme l'illustrent les figures 2 et 3a,3b, les plaques 5 peuvent présenter des bossages 31 formant perturbateurs du second fluide circulant dans les seconds canaux 25, de manière à améliorer l'échange de chaleur.

Les plaques 5 peuvent encore comporter des nervures 33 longitudinales joignant deux plaques 5 d'une paire de manière à définir des passes de circulation 35a à 35d pour le second fluide.

Ainsi, le premier fluide, ici l'air de suralimentation pénètre dans l'échangeur 1 par la boîte d'entrée 13 pour le premier fluide, circule dans le faisceau 3 d'échange de chaleur dans les premiers canaux 23 puis sort de l'échangeur 1 par la boîte de sortie 15 pour le premier fluide afin d'alimenter le moteur (non représenté).

Quant au second fluide, il pénètre dans le faisceau 3 d'échange de chaleur, par la tubulure d'entrée 19 pour le second fluide, circule via les tubulures 29 dans les seconds canaux 25 du faisceau 3 d'échange de chaleur selon une ou plusieurs passes de circulation, pour échanger de la chaleur avec l'air de suralimentation à refroidir et quitte ensuite le faisceau 3 d'échange de chaleur par la tubulure de sortie 21 pour le second fluide.

### L'admission de l'air refroidi de la boîte de sortie au moteur

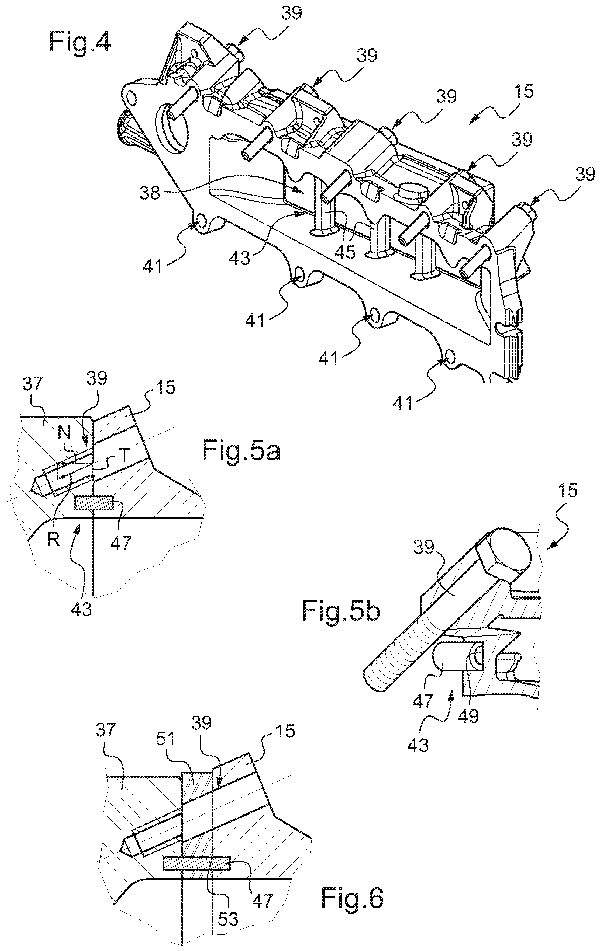

En se référant maintenant aux figures 4 à 6, on décrit plus en détail l'assemblage de la boîte de sortie 15 (ou boîte d'admission 15) et de la culasse 37 du moteur (représentée partiellement sur les figures 5a et 6) pour l'admission de l'air refroidi par l'échangeur 1 tel que décrit précédemment.

Afin de permettre l'admission de l'air refroidi dans chacun des cylindres du moteur (non représenté), la boîte de sortie 15 comporte au moins une ouverture 38 (figure 4) formant section de passage pour l'air refroidi. Cette section de passage 38 communique d'une part directement avec le faisceau 3 et d'autre part avec le moteur pour permettre à l'air refroidi d'être dirigé vers le moteur après avoir traversé le faisceau 3.

### Premier mode de réalisation

Selon un premier mode de réalisation, la boîte de sortie 15 forme une interface directe avec la culasse 37 du moteur.

Dans ce cas, la boîte de sortie 15 est directement assemblée sur la culasse 37 du moteur, par exemple par un moyen de serrage comprenant des premières vis de serrage 39 et éventuellement des secondes vis de serrage (non représentées) destinées à traverser les orifices 41 sur la boîte de sortie 15.

Ces secondes vis (non représentées) sont par exemple sensiblement perpendiculaires au plan de contact entre la boîte de sortie 15 te la culasse 37 du moteur.

Au contraire, selon le mode de réalisation illustré (figures 5a,5b), les premières vis de serrage 39 sont inclinées par rapport au plan de contact entre la boîte de sortie 15 et la culasse 37. La force de serrage appliquée est donc oblique selon une résultante R (figure 5a) avec une composante normale N et une composante tangentielle T.

Avec un tel agencement le serrage des premières vis 39 engendre un effort tangentiel sur la boîte de sortie 15 qui peut amener la structure de la boîte de sortie 15 à se déformer.

Pour compenser cela, la boîte de sortie 15 comporte un moyen de reprise 43 de cet effort tangentiel.

En se référant à la figure 4, le moyen de reprise d'effort 43 comporte au moins un renfort de rigidification 45 de la boîte de sortie 15, venu de matière avec la boîte de sortie 15.

Dans l'exemple illustré, la boîte de sortie 15 comporte trois renforts de rigidification 45. Le nombre de renforts de rigidification 45 est choisi en fonction de l'effort tangentiel à compenser.

Ces renforts de rigidification 45 sont disposés dans la section de passage 38 de l'air refroidi, autrement appelé veine d'air, de façon à éviter la déformation structurelle de la boîte de sortie 15 lorsque le serrage oblique est appliqué.

À cet effet, les renforts 45 s'étendent axialement à travers l'ouverture 38 en étant donc orientés selon une direction sensiblement parallèle à la direction de la composante tangentielle T.

Le positionnement de ces renforts de rigidification 45 peut être adapté selon la structure de la boîte de sortie 15 afin d'éviter sa déformation; de façon non exhaustive on peut donc placer les renforts 45 au niveau des extrémités de l'ouverture 38, sensiblement au même niveau que les premières vis de serrage 39, entre deux vis de serrage 39 ou tout autre positionnement jugé judicieux par l'Homme du Métier tant qu'ils sont placés dans la section de passage 38 de l'air.

Ces renforts de rigidification 45 sont ici réalisées sous la forme de colonnes. On peut prévoir que ces colonnes de rigidification soient pleines ou en variante vides de façon à limiter le poids de l'échangeur 1.

Bien sûr, on peut prévoir tout autre forme pour les renforts de rigidification 45.

En complément, le moyen de reprise d'effort 43 peut comporter au moins une goupille 47 de reprise d'effort, par exemple sensiblement cylindrique.

Cette goupille s'étend entre les deux surfaces en vis-à-vis de la boîte de sortie 15 et de la culasse 37, selon une direction sensiblement perpendiculaire au plan de contact entre la boîte de sortie 15 et la culasse 37.

Pour cela, la boîte de sortie 15 comporte un logement 49 pour recevoir une première portion de la goupille 47 et la culasse 37 comporte un contre-logement (non représenté) pour recevoir l'autre portion de la goupille 47.

Le nombre de goupille 47 est choisi en fonction de l'effort tangentiel à compenser.

Le positionnement de la ou des goupilles 47 peut être adapté selon l'effort tangentiel à compenser tant qu'elles sont disposées au niveau du plan de contact entre la boîte de sortie 15 et la culasse 37; de façon non exhaustive on peut donc placer des goupilles 47 au niveau des extrémités du plan de contact entre la boîte de sortie 15 et la culasse 37, sensiblement en-dessous des premières vis de serrage 39, entre deux vis de serrage 39 ou tout autre positionnement jugé judicieux par l'Homme du Métier.

Selon une alternative à la goupille, peut-on prévoir (en référence à la figure 5b) que la boîte de sortie 15 présente une saillie 47 orientée de façon sensiblement perpendiculaire au plan de joint et configurée pour engager un contre-logement complémentaire prévu sur la culasse 37 du moteur.

### Deuxième mode de réalisation

Un deuxième mode de réalisation illustré sur la figure 6 diffère du premier mode de réalisation par le fait que la boîte de sortie 15 est assemblée au moteur par un élément intermédiaire, tel qu'une platine ou volet de « Swirl » 51.

Une telle platine de « Swirl » 51 permet de faire varier la quantité d'air admis. De façon similaire au premier mode de réalisation, la boîte de sortie 15 comporte des renforts de rigidification 45 (figure 4) tels que décrit précédemment.

De même, on peut prévoir, en complément, une ou plusieurs goupilles 47 pour la reprise de l'effort tangentiel.

Toutefois, dans ce cas la goupille 47 traverse également la platine de « Swirl » 51 pour venir se loger dans le contre-logement prévu sur la culasse 37, comme l'illustre la figure 6. Pour cela, la platine de « Swirl » présente un orifice 53 pour le passage de la goupille 47.

Comme précédemment, cette goupille 47 permet de compenser les efforts tangentiels appliqués à la structure de la boîte de sortie 15 en les transmettant à la partie la plus rigide, ici la culasse 37 du moteur.

Ainsi, le ou les moyens de reprise d'effort 43 de la boîte d'admission 15 de l'air refroidi par l'échangeur de chaleur 1, permet de compenser l'effort tangentiel appliqué à la structure de la boîte d'admission 15 lors de l'assemblage sur la culasse 37 du moteur et réduire le risque de déformation de la boîte d'admission 15.

## Revendications

1. Échangeur de chaleur (1) pour refroidir l'air de suralimentation d'un moteur en particulier pour véhicule automobile, comportant un dispositif d'admission de fluide pour moteur, ledit dispositif comprenant une boîte d'admission (15) destinée à être assemblée sur la culasse (37) du moteur à l'aide d'un moyen de serrage (39) exerçant une force de serrage inclinée selon une résultante (R) avec une composante normale (N) et une composante tangentielle (T) par rapport au plan de contact entre ladite boîte d'admission (15) et la culasse (37), ladite boîte d'admission (15) formant la boîte de sortie (15) dudit échangeur de chaleur (1) entre un premier fluide configuré pour alimenter le moteur et un deuxième fluide, ledit au moins un moyen de reprise d'effort (43) comportant un nombre prédéterminé de renforts de rigidification (45) de ladite boîte d'admission (15), lesdits renforts de rigidification (45) étant venus de matière avec ladite boîte d'admission (15), ledit dispositif d'admission comportant au moins un moyen de reprise d'effort (43) selon la composante tangentielle (T) de la force de serrage, ladite boîte d'admission (15) comportant une ouverture (38) pour le passage du premier fluide provenant de l'échangeur de chaleur (1), lesdits renforts de rigidification (45) s'étendant axialement à travers ladite ouverture (38), selon une direction sensiblement parallèle à la composante tangentielle (T) de la force de serrage.

2. Échangeur de chaleur (1) selon la revendication 1, **caractérisé en ce que** lesdits renforts de rigidification (45) sont réalisés sous forme de colonnes.

3. Échangeur de chaleur (1) selon l'une quelconque des revendications précédentes, ledit au moins un moyen de reprise d'effort (43) comportant en outre une goupille (47) de reprise d'effort s'étendant entre les deux surfaces en vis-à-vis de ladite boîte d'admission (15) et de la culasse (37) du moteur, selon une direction sensiblement perpendiculaire au plan de contact entre la boîte de sortie (15) et la culasse (37) du moteur.

4. Échangeur de chaleur (1) selon la revendication 3, **caractérisé en ce que** ladite goupille (47) présente une forme sensiblement cylindrique.

5. Échangeur de chaleur (1) selon l'une des revendications 3 ou 4, **caractérisé en ce que** ladite goupille (47) est d'une part reçue dans un logement (49) complémentaire de ladite boîte d'admission (15) et d'autre part configurée pour engager un contre-logement complémentaire prévu sur la culasse (37) dudit moteur.

6. Échangeur de chaleur (1) selon l'une quelconque des revendications précédentes, **caractérisé en ce que** le moyen de serrage comporte au moins une vis de serrage (39).

## Patentansprüche

1. Wärmetauscher (1) zum Kühlen der Ladeluft eines Motors, insbesondere für ein Kraftfahrzeug, welcher eine Fluideinlassvorrichtung für einen Motor aufweist, wobei die Vorrichtung einen Einlasskasten (15) umfasst, der dazu bestimmt ist, auf dem Zylinderkopf (37) des Motors mithilfe eines Spannmittels (39) montiert zu werden, das eine Spannkraft ausübt, die in Richtung einer Resultierenden (R) mit einer normalen Komponente (N) und einer tangentialen Komponente (T) bezüglich der Kontaktebene zwischen dem Einlasskasten (15) und dem Zylinderkopf (37) geneigt ist, wobei der Einlasskasten (15) den Austrittskasten (15) des Wärmetauschers (1) zwischen einem ersten Fluid, das dafür ausgelegt ist, den Motor zu versorgen, und einem zweiten Fluid bildet, wobei das wenigstens eine Kraftaufnahmemittel (43) eine vorbestimmte Anzahl von Versteifungselementen (45) des Einlasskastens (15) aufweist, wobei die Versteifungselemente (45) stoffschlüssig mit dem Einlasskasten (15) verbunden sind, wobei die Einlassvorrichtung wenigstens ein Mittel zur Kraftaufnahme (43) in Richtung der tangentialen Komponente (T) der Spannkraft aufweist, wobei der Einlasskasten (15) eine Öffnung (38) für den Durchlass des vom Wärmetauscher (1) kommenden ersten Fluids aufweist, wobei sich die Versteifungselemente (45) axial durch die Öffnung (38) hindurch in einer Richtung erstrecken, die im Wesentlichen parallel zur tangentialen Komponente (T) der Spannkraft ist.

2. Wärmetauscher (1) nach Anspruch 1, **dadurch gekennzeichnet, dass** die Versteifungselemente (45) in Form von Säulen ausgebildet sind.

3. Wärmetauscher (1) nach einem der vorhergehenden Ansprüche, wobei das wenigstens eine Kraftaufnahmemittel (43) außerdem einen Stift (47) zur Kraftaufnahme aufweist, der sich zwischen den zwei einander gegenüberliegenden Flächen des Einlasskastens (15) und des Zylinderkopfes (37) des Motors in einer Richtung erstreckt, die im Wesentlichen senkrecht zur Kontaktebene zwischen dem Einlasskasten (15) und dem Zylinderkopf (37) des Motors ist.

4. Wärmetauscher (1) nach Anspruch 3, **dadurch gekennzeichnet, dass** der Stift (47) eine im Wesentlichen zylindrische Form aufweist.

5. Wärmetauscher (1) nach einem der Ansprüche 3 oder 4, **dadurch gekennzeichnet, dass** der Stift (47) einerseits in einer komplementären Aufnahme (49) des Einlasskastens (15) aufgenommen ist und andererseits dafür ausgebildet ist, in eine komplementäre Gegenaufnahme einzugreifen, die am Zylinderkopf (37) des Motors vorgesehen ist.

6. Wärmetauscher (1) nach einem der vorhergehenden Ansprüche, **dadurch gekennzeichnet, dass** das Spannmittel wenigstens eine Spannschraube (39) aufweist.

## Claims

1. Heat exchanger (1) for cooling the charge air of an engine, particularly for a motor vehicle, comprising an engine fluid intake device, the said device comprising an intake tank (15) intended to be assembled on the cylinder head (37) of the engine using a clamping means (39) that exerts a clamping force that is inclined along a resultant (R) that has a normal component (N) and a tangential component (T) with respect to the plane of contact between the said intake tank (15) and the cylinder head (37), the said intake tank (15) forming the outlet tank (15) of the said heat exchanger (1) that exchanges heat between a first fluid configured to be supplied to the engine and a second fluid, the said at least one load reacting means (43) comprising a predetermined number of stiffening reinforcers (45) that reinforce the said intake tank (15), the said stiffening reinforcers (45) being formed as one with the said intake tank (15), the said intake device comprising at least one load reacting means (43) reacting load with respect to the tangential component (T) of the clamping force, the said intake tank (15) comprising
an opening (38) of a passage of the first fluid coming from the heat exchanger (1), the said stiffening reinforcers (45) extending axially through the said opening (38) in the direction substantially parallel to the tangential component (T) of the clamping force.

2. Heat exchanger (1) according to Claim 1, **characterized in that** the said stiffening reinforcers (45) are produced in the form of columns.

3. Heat exchanger (1) according to either one of the preceding claims, the said at least one load reacting means (43) further comprising a load reacting pin (47) extending between the two mutually-facing surfaces of the said intake tank (15) and of the cylinder head (37) of the engine, in a direction substantially perpendicular to the plane of contact between the outlet tank (15) and the cylinder head (37) of the engine.

4. Heat exchanger (1) according to Claim 3, **characterized in that** the said pin (47) has a substantially cylindrical shape.

5. Heat exchanger (1) according to one of Claims 3 and 4, **characterized in that** the said pin (47) is, on the one hand, housed in a complementary housing (49) belonging to the said intake tank (15) and, on the other hand, configured to engage in a complementary mating housing provided on the cylinder head (37) of the said engine.

6. Heat exchanger (1) according to any one of the preceding claims, **characterized in that** the clamping means comprises at least one clamping screw (39).
